Europäisches Patentamt

(19) European Patent Office

Office européen des brevets

(11) Publication number: **0 002 572**
**B1**

(12) **EUROPEAN PATENT SPECIFICATION**

(45) Date of publication of patent specification: **30.12.81**

(21) Application number: **78300683.6**

(22) Date of filing: **28.11.78**

(51) Int. Cl.³: **C 08 L 23/32, C 08 K 5/01, C 08 K 5/00**

(54) Elastomeric blend compositions of a sulphonated elastomer polymer.

(30) Priority: **29.11.77 US 855766**

(43) Date of publication of application:
**27.06.79 Bulletin 79/13**

(45) Publication of the grant of the European patent:
**30.12.81 Bulletin 81/52**

(84) Designated Contracting States:
**BE DE FR GB NL**

(56) References cited:
**US - A - 3 642 728**
**US - A - 3 847 854**
**US - A - 3 974 240**

(73) Proprietor: **Exxon Research and Engineering Company**
**P.O.Box 390 200 Park Avenue**
**Florham Park New Jersey 07932 (US)**

(72) Inventor: **Lundberg, Robert Dean**
**4 Brian Drive**
**Bridgewater New Jersey (US)**
Inventor: **Bock, Jan**
**500 Juniper Lane**
**Bridgewater New Jersey (US)**
Inventor: **Makowski, Henry Stanislaus**
**2045 Winding Brook Way**
**Scotch Plains New Jersey (US)**

(74) Representative: **Field, Roger Norton et al,**
**Hanover Court 5 Hanover Square**
**London W1R 0HQ (GB)**

Courier Press, Leamington Spa, England.

# 0 002 572

## Elastomeric blend compositions of a sulphonated elastomer polymer

The present invention relates to blend compositions of a chemical additive and a neutralized sulphonated elastomeric polymer for example those disclosed in U.S. 3974240. This U.S. Patent 3,974,240 clearly discloses that one must incorporate a polyolefinic resin and this may be a low molecular weight crystalline polyolefin wax. It is an essential and indispensible ingredient and in fact the only way that one could obtain the proper balance of physical and rheological properties to make a moulding compound was to incorporate the polyolefinic resin. By contrast our invention solves this problem by providing a sulphonated resin with wax that has the proper balance of physical and rheological properties without the incorporation of a polyolefinic resin which has an adverse effect on the surface properties of the elastomer by increasing the hardness.

According to this invention an elastomeric blend composition comprises (a) a sulphonated elastomeric polymer at least partially neutralised and formed from an elastomeric polymer having from 0.1 to 10 wt. percent of olefinic unsaturation and (b) a non-polar and non-polyolefinic wax which is a synthetic, natural or petroleum wax and containing less than 4.0 wt.% oxygen at a concentration level of from 2 to 20 weight percent of the composition; provided said composition contains no polyolefinic resin.

The neutralized sulphonated elastomeric polymers are derived from unsaturated polymers which include low unsaturated elastomeric polymers such as Butyl rubber, or EPDM terpolymers.

Alternatively, other unsaturated polymers which may be used are partially hydrogenated polyisoprenes, partially hydrogenated polybutadienes, Neoprene, styrene-butadiene copolymers or isoprene-styrene random copolymers.

The expression "Butyl rubber" means copolymers made from a polymerization reaction mixture having therein from 70 to 99.5% by weight of an isoolefin which has 4 to 7 carbon atoms per molecule, e.g. isobutylene and 0.5 to 30% by weight of a conjugated multiolefin having from 4 to 14 carbon atoms per molecule, e.g. isoprene. The resulting copolymer contains 85 to 99.8% by weight of combined isoolefin and 0.2 to 15% of combined multiolefin.

Butyl rubber generally has a Staudinger molecular weight of 20,000 to 500,000, preferably 25,000 to 400,000 especially about 100,000 to 400,000, and a Wijs Iodine No. of 0.5 to 50, preferably 1 to 15. The preparation of Butyl rubber is described in U.S. Patent 2,356,128.

For the purpose of this invention, however, only those Butyl rubber having incorporated therein from 0.2 to 10% of combined multiolefin; preferably 0.5 to 6%; more preferably 1 to 4%, e.g. 2%, are used.

Illustrative of such a Butyl rubber is Exxon Butyl 365 (Exxon Chemical Co.), having a mole percent unsaturation of 2.0% and a Mooney viscosity (ML, 1 + 8, 100°C) of 40—50. (The word 'Exxon' is a registered Trade Mark at least in the United Kingdom.)

Low molecular weight Butyl rubbers, i.e. Butyl rubbers having a viscosity average molecular weight of 5,000 to 85,000 and a mole percent unsaturation of 1 to 5% may be sulfonated to produce the polymers useful in this invention. Preferably, these polymers have a viscosity average molecular weight of 25,000 to 60,000.

In general, butyl rubbers and other elastomeric polymers may have an Mn of less than 60,000 and a Mooney viscosity at 100°C of 5 to 60.

The EPDM terpolymers are low unsaturated polymers having 1 to 10.0 wt. % olefinic unsaturation, preferably 2 to 8 wt.%, more preferably 3 to 7 wt.% defined according to the definition as found in ASTM—D—1418—64 and EPDM is intended to mean terpolymers containing ethylene and propylene in the backbone and a diene in the side chain. Illustrative methods for producing these terpolymers are found in U.S. Patent 3,280,082, British Patent 1,030,289 and French Patent 1,386,600. The preferred polymers contain 40 to 75 wt. % ethylene and 1 to 10 wt. % of a diene monomer, the balance of the polymer being propylene. Preferably, the polymer contains 45 to 70 wt. % ethylene, e.g. 50 wt. % and 2.6 to 8.0 wt. % diene monomer, e.g. 5.0 wt. %. The diene monomer is preferably a non-conjugated diene.

Illustrative of these non-conjugated diene monomers which may be used in the terpolymer (EPDM) are 1,4-hexadiene, dicyclopentadiene, 5-ethylidene-2-norbornene, 5-methylene-2-norbornene, 5-propenyl-2-norbornene, and methyl tetrahydroindene.

A typical EPDM is Vistalon 2504 (Exxon Chemical Co.), a terpolymer having a Mooney viscosity (ML, 1 + 8, 100°C) of 40 and having an ethylene content of 50 wt. % and a 5-ethylidene-2-norbornene content of 5.0 wt. %. The $\overline{M}n$ of Vistalon 2504 is 47,000, the $\overline{M}v$ is 145,000 and the $\overline{M}w$ is 174,000. (The word 'Vistalon' is a registered Trade Mark at least in the United Kingdom.)

Another EPDM terpolymer Vistalon 2504—20 is derived from Vistalon 2504 by a controlled extrusion process, wherein the resultant Mooney viscosity at 100°C is 20. The $\overline{M}n$ of Vistalon 2504—20 is 26,000, the $\overline{M}v$ is 90,000 and the $\overline{M}w$ is 125,000.

Nordel 1320 (DuPont) is another terpolymer having a Mooney viscosity at 100°C of 25 and having 53 wt. % of ethylene, 3.5 wt. % of 1,4-hexadiene, and 43.5 wt. % of propylene. (The word 'Nordel' is a registered Trade Mark at least in the United Kingdom.)

The EPDM Terpolymers preferably have a number average molecular weight ($\overline{M}n$) of 10,000 to

2

200,000, more preferably of 15,000 to 100,000 and most preferably of 20,000 to 60,000. The Mooney viscosity (ML, 1 + 8, 100°C) of the EPDM terpolymer is preferably 5 to 60, more preferably 10 to 50, most preferably 15 to 40. The $\overline{M}v$ of the EPDM terpolymer is preferably below 350,000 and more preferably below 300,000. The $\overline{M}w$ of the EPDM terpolymer is preferably below 500,000 and more preferably below 350,000.

The preparation of these neutralized sulfonated elastomers has been described in U.S. Patent 3,642,728 and European Publication No 2356. The exact method employed to prepare the neutralized sulfonated EPDM (or Butyl) is not of critical importance provided the resulting product is substantially free of covalent cross-linking (or gel free), has the requisite sulfonate content, and exhibits the rheological characteristics described in this application.

However, generally, the neutralised sulphonated EPDM polymer has 15 to 50 neq sulphonate groups per 100 gm of the sulphonated EPDM, at least 90% sulphonate groups being neutralised with a metal cation which is lead, antimony, iron, a metal of group IIA, IB or IIB of the Periodic Table of Elements or a mixture thereof.

The melt viscosities of the polymeric systems investigated were determined by the use of an Instron Capillary Rheometer. (The word 'Instron' is a registerd Trade Mark at least in the United Kingdom.) Generally, the melt viscosity measurements were made at a temperature of 200°C. and at various shear rates corresponding to crosshead speeds from .127 mm/min to 514 mm/min. The apparent viscosity at 200°C. and at a shear rate of .74 $sec^{-1}$ (.127 mm/min) is employed as a characterization parameter in this invention. A measure of the melt elasticity of a given system can also be obtained from these rheological measurements. A type of flow instability known as melt fracture is exhibited by many polymeric materials of high molecular weight. This phenomenon is shear sensitive and thus will generally exhibit itself at a given shear rate and temperature. The shear rate for the onset of melt fracture indicates the upper shear rate for processing a given material. This is used as a characterization parameter for compounds employed in extrusion processing.

The metal sulfonate containing polymers at the higher sulfonate levels possess extremely high melt viscosities and are thereby difficult to process. The addition of ionic group plasticizers markedly reduces melt viscosity and frequently enhances physical properties.

To the neutralized sulfonated elastomeric polymer may be added, in either solution or to the crumb of the unneutralized sulfonated elastomeric polymer, a preferential plasticizer which may have a melting point of at least 25°C and may be a carboxylic acid having 5 to 30 carbon atoms per molecule, more preferably 8 to 22 carbon atoms, or basic salts of these carboxylic acids wherein the cation of the basic salt is aluminium, ammonium, lead, iron, antimony or a metal of Groups IA, IIA, IB and IIB of the Periodic Table of Elements or a mixture of said acid and said salt. The carboxylic acids and metal carboxylates may be lauric, myristic, palmitic or stearic acids or salts thereof; e.g. zinc stearate, magnesium stearate or zinc laurate. The Periodic Table used in this specification and claims is that of the IUPAC (1965 revision).

The preferential plasticizer may be incorporated into the neutralized sulfonated elastomeric polymer at 0 to 60 parts by weight based on 100 parts of the sulfonated polymer, more preferably at 5 to 40, and most preferably at 7 to 25. The metallic salt of the fatty acid can also be used as neutralizing agent. In the case of the neutralizing agent and plasticizer being the identical chemical species, additional metallic salt is added over the required levels of neutralization. Alternative preferential plasticizers are organic esters, ketones, phenols, trialkyl phosphates, alcohols, amines, amides, ammonium and amine salts of carboxylic acids and mixtures thereof. The preferred plasticizers are fatty acid or metallic salts of fatty acid and mixtures thereof, for example barium stearate or sodium stearate. The resultant neutralized sulfonated elastomeric polymer with preferential plasticizer is isolated from the solution by conventional steam stripping and filtration.

The resultant neutralized and plasticized sulfonate elastomer preferably as a viscosity at 200°C. and a shear rate at .74 $sec^{-1}$ of $1 \times 10^3$ to $5 \times 10^5$ Pa.s ($1 \times 10^4$ poise to $5 \times 10^6$ poise), more preferably of $5 \times 10^3$ to $2 \times 10^5$ Pa.s ($5 \times 10^4$ poise to $2 \times 10^6$ poise) and most preferably of $1 \times 10^4$ to $1 \times 10^5$ Pa.s ($1 \times 10^5$ poise to $1 \times 10^6$ poise). The resultant neutralized sulfonated EPDM terpolymer with preferential plasticizer is isolated from the solution by conventional steam stripping or coagulation followed by filtration.

The neutralized sulfonated EPDM terpolymer is blended with a non-polar wax or a combination of a filler and a non-polar wax by techniques well known in the art. For example, the blend composition can be compounded on a two roll mill. Other methods known in the art which are suitable for making these compositions include those methods employed in the plastic and elastomer industries for mixing polymer systems. An excellent polymer blend composition of this invention can be obtained through the use of a high shear batch intensive mixer called the Banbury. Alternatively, economic advantages in terms of time and labor savings can be obtained through the use of a Farrel Continuous Mixer, a twin screw extruder, or extrusion techniques which are continuous mixing type equipment. (The word 'Farrel' is a registered Trade Mark at least in the United Kingdom). The Banbury mixing device is the preferred batch type mixer, and the twin screw extruder is the preferred continuous mixer.

The fillers employed in the present invention may be a talc, ground calcium carbonate, water precipitated calcium carbonate, aluminium silicate or calcium silicate, or delaminated, calcined or

3

hydrated clay or a mixture thereof. These fillers may be incorporated into the blend composition at 25 to 350 parts by weight per 100 parts of the sulfonated polymer, more preferably at 50 to 350; or alternatively at 5 to 300. Typically, these fillers have a particle size of 0.03 to 20 microns, preferably 0.3 to 10, and more preferably 0.5 to 10. The oil absorption as measured by grams of oil absorbed by 100 grams of filler may be 10 to 100, more preferably 10 to 85 and most preferably 10 to 75. Typical fillers employed in this invention are illustrated in Table 1.

TABLE 1

| Filler | Code No. | Oil Absorption grams of oil/100 grams of filler | Specific Gravity | Avg. Particle Size Micron | pH |
|---|---|---|---|---|---|
| Calcium carbonate ground | Atomite | 15 | 2.71 | | 9.3 |
| Calcium carbonate precipitated | Purecal U | 35 | 2.65 | .03—.04 | 9.3 |
| Delaminated clay | Polyfil XB | 30 | 2.61 | 4.5 | 6.5—7.5 |
| Hydrated clay | Suprex | | 2.6 | 2 | 4.0 |
| Calcined clay | Icecap K | 50—55 | 2.63 | 1 | 5.0—6.0 |
| Magnesium silicate (talc) | Mistron Vapor | 60—70 | 2.75 | 2 | 9.0—7.5 |

(The word 'Mistron' is a registered Trade Mark at least in the United Kingdom).

# 0 002 572

Waxes are derived from various sources: petroleum waxes covering paraffin and microcrystallin wax; synthetic waxes including Fischer-Tropsch wax; natural waxes from plants, insects and animals. The petroleum and synthetic waxes are most important for the present invention.

Other than paraffinic, naphthenic and aromatic hydrocarbon groups waxes can contain polar functional groups such as alcohols, ketones, and esters. It is essential that the waxes used in this invention be predominantly non-polar since polar functional groups function as plasticizers for the ionic sulfonate groups. Excessive plasticization is undesirable. The largest percentage of polar functional groups in waxes are those containing oxygen by virtue of hydrocarbon oxidation. For the purpose of this invention a wax is considered to be non-polar when it contains less than 4.0 wt. %, preferably less than 2.0 wt. % oxygen.

A description of paraffinic and microcrystalline waxes is given in the Kirk-Othmer "Encyclopedia of Polymer Science and Technology", 1971, Vol. 14, pp. 768—779 and is abstracted below.

Paraffin waxes consist primarily of straight-chain saturated hydrocarbons with only a small amount of branching such as 2-methyl groups, near the end of the chain. The amount of n-alkanes in paraffin wax usually exceeds 75% and may reach almost 100%. The molecular weights of the hydrocarbons in paraffin wax range from 280 to 560 ($C_{20}$—$C_{40}$), with each specific wax having a range of about eight to fifteen carbon numbers.

The ranges of properties representative of several different paraffin waxes are presented in Table 2. Some of the commercial waxes included in the listed property range are also given. Paraffin waxes are generally lower melting, have lower molecular weights, and have lower viscosities when liquid than microcrystalline waxes. Paraffin waxes, in the solid state, exist in the form of large, distinct crystals, in contrast to the microscopic crystals of microcrystalline waxes. Physical properties of paraffin wax of an average molecular weight of 400 are listed in Table 3. Paraffin wax is soluble in non-polar organic solvents such as benzene, chloroform, carbon tetrachloride, and naphtha, and insoluble in polar solvents such as water and methanol.

6

## TABLE 2

### Typical Properties of Paraffin Wax in Different Melting Point Ranges

| | A[a] | B[b] | C[c] | D[d] | E[e] |
|---|---|---|---|---|---|
| Melting point, °C (ASTM–D–87) | 51–53 | 54–56 | 56–58 | 60–62 | 67–71 |
| Oil Content, % (ASTM–D–721) | 0.1–0.4 | 0.1–0.3 | 0.1–0.2 | 0.1–0.2 | 0.2–0.5 |
| Hardness (penetration) at 25°C (77°F) (ASTM–D–1321) | 14–20 | 12–15 | 10–14 | 9–14 | 9–18 |
| Hardness (penetration) at 38°C (100°F) (ASTM–D–1321) | 80–200 | 50–100 | 40–60 | 20–40 | 13–38 |
| Saybolt viscosity at 99°C (210°F), SUS (ASTM–D–88) | 37–39 | 37–39 | 38–40 | 40–42 | 45–53 |
| Kinematic viscosity at 99°C (210°F), (cSt) $m^2/_s \times 10^{-6}$ | 3.2–3.8 | 3.2–3.8 | 3.6–3.9 | 4.1–4.9 | 5.7–8.2 |

[a] Includes Atlantic Wax 151, Essowax 2530, Gulfwax 27, Mobilwax 128/130, Shellwax 100, Sunoco Wax 3425. (The words 'Mobilwax' and 'Sunoco' are registered Trade Marks at least in the United Kingdom).

[b] Includes Aristowax 130/134, Atlantic Wax 171, Boron wax 133/135, Essowax 3050, Shellwax 120, Sunoco wax 3422.

[c] Includes Boron wax 138/140, Eskar wax R–35, Essowax 3250, Mobilwax 138/140, Sinclair wax 133, Sunoco wax 3420.

[d] Includes Atlantic wax 1115, Essowax 4030, Gulfwax 40, Pacemaker wax 45, Sinclair wax 141, Shellwax 270.

[e] Includes Aristowax 165, Essowax 5250, Shellwax 3000, Sunoco wax 5512.

Microcrystalline waxes are the solid hydrocarbon mixtures refined from crude petrolatums, which are obtained from the dewaxing of residual lubricating oil stocks and tank-bottom wax. These waxes are known as microcrystalline because their relatively small crystals give an amorphous appearance to the waxes in the solid state.

Microcrystalline waxes vary considerably in composition and properties, in contrast to paraffin wax. Generally, microcrystalline waxes consist of branched-chain hydrocarbons and alkyl cycloaliphatic (naphthenic) hydrocarbons as well as some straight-chain molecules, depending on the particular wax. The molecular weights range from 450 to 800 ($C_{35}$—$C_{60}$). Some physical properties are listed in Table 3.

TABLE 3

TYPICAL PHYSICAL PROPERTIES OF PETROLEUM WAXES

|  | Paraffin Wax | Microcrystalline Wax |
|---|---|---|
| Density of solid at 20°C, g/ml | 0.88—0.93 | 0.89—0.94 |
| Density of liquid at 100°C, g/ml | 0.73—0.77 | 0.78—0.81 |
| Refractive index in solid 20°C | 1.526—1.535 |  |
| Refractive index, liquid , 100°C | 1.418—1.433 | 1.435—1.445 |
| Specific heat of liquid, kJ/kg°C, (cal/g°C) | 2.09—2.20 (0.50—0.53) | 2.09—2.30 (0.05—0.55) |
| Latent heat of fusion, kJ/kg (cal/g) | 230—293 (55—61) | 209—242 (50—58) |

The waxes are incorporated into the blend composition at a concentration level of 2 to 20 wt. %, more preferably 5 to 15 wt. %; and most preferably 7 to 15 wt. %.

The waxes employed in the present invention usually have a softening point of 52°C to 104°C, more preferably 57°C to 93°C, and most preferably 66°C to 93°C. The preferred waxes have an $\overline{M}n$ of 300 to 4000. Some of the typical waxes are described in Table 2. These waxes are typically crystalline wherein the percent crystallinity can vary depending on the composition of the wax and the $\overline{M}n$.

The incorporation of the waxes at the levels described in this invention imparts some beneficial and surprising characteristics to the sulfonated elastomeric compounds. Those benefits include a significant reduction of melt viscosity at elevated temperature for these compounds, with little sacrifice in physical properties at ambient temperatures, a reduction in tack at room temperature, and a substantial improvement in the resistance of these sulfonated EPDM based compounds to moisture during prolonged immersion. This latter characteristic is of substantial importance because these ionic elastomers can pick up as much as 30 to 50 wt. % moisture after prolonged immersion at 50°C. In contrast the incorporation of a suitable wax at a sufficient level will markedly reduce the level of water sensitivity. The magnitude of this improvement is believed to depend on the amount of wax incorporated.

In addition to these improvements, it is observed that the addition of modest levels of wax to sulfonated elastomer compounds improves the extrusion behavior at elevated temperatures by providing a more uniform flow than is obtained in the absence of wax. This improvement is detectable at a relatively low level of wax, from 2 to 15 wt. % based on compound.

In addition a rubber process oil may be incorporated in the blend at a level of up to 100 parts by weight per 100 parts by weight of sulphonated polymer.

The ingredients incorporated into the blend compositions of the present invention, in conjunction with the type of elastomeric polymer, the degree of sulfonation, and the metal counterion of the neutralized sulfonated elastomeric polymer and the plasticizer give materials processable by extrusion or injection molding processes into elastomeric articles having the desirable physical and rheological properties.

The advantages of both the rheological and physical properties of the blend compositions of the present invention can be more readily appreciated by reference to the following examples and tables. Unless otherwise specified, all measurements are in parts per hundred by weight.

Preparation

One hundred grams of an EPDM terpolymer, Vistalon 2504—20, was dissolved under agitation in 1000 ml. of n-hexane at 40°C. The resultant cement was cooled to room temperature and 5.74 ml. of acetic anhydride (60.75 mmoles) was then added. While stirring the mixture, 2.1 ml. of 95% $H_2SO_4$ (37.5 mmoles) was added dropwise. The sulfonation reaction was quenched after 30 minutes with 150

**0 002 572**

ml. of isopropanol. The acid form of the sulfonated polymer was analyzed by Dietert Sulfur Analysis to have 33 meq. of $SO_3H$ groups per 100 grams of sulfonated polymer. To the quenched sulfonated cement was added with stirring for thirty minutes 25.6 grams (90 mmoles/100 grams of EPDM) of stearic acid. A solution of 9.87 grams (90 meq./100 g. of EPDM) of zinc acetate dihydrate dissolved in 25 ml. of distilled water was then added in the cement and the cement stirred for an additional 30 minutes. Antioxidant 2246 (0.5 grams) was then added to the cement. The resultant plasticized, neutralized sulfonated EPDM terpolymer was then isolated by steam stripping and drying on a rubber mill at 104°C, wherein the sulfonated terpolymer has an apparent viscosity at 0.74 sec$^{-1}$ at 200°C of about $3.3 \times 10^4$ Pa.s ($3.3 \times 10^5$ poise). This material was incapable of being injection molded on a low pressure Desma machine equipped with a standard canvas footwear type mold. (The word 'Desma' is a registered Trade Mark at least in the United Kingdom.)

Example 1

The sulfonated EPDM gum was prepared in an identical manner as described in the preparation. The polymer was blended with several different waxes by blending 10 parts of wax with 100 parts of Sulfo EPDM in a suitable Brabender mixing head at a temperature of about 175°C. until a smooth homogeneous dispersion was obtained, for a total of about 10—15 minutes. The resulting viscous melt was then sheeted out on a warm [~93°C(200°F.)] two roll mill. The waxes employed are described in Table 4.

TABLE 4

WAXES EMPLOYED IN SULFO EPDM BLENDS

| Brand Name | Paraffin Wax 3504 | Mikon 10 |
| --- | --- | --- |
| Description | Refined Paraffin wax | Refined micro-crystalline wax |
| Approximate Mol. Wt. | ~500 | ~700 |
| Drop Melting Point, °C | 67 | 92 |
| Density g/cc | 0.923 | 0.942 |
| Softening Point, °C | —— | —— |

The melt index of the wax-Sulfo EPDM blends was measured at 190°C. at a pressure of 226 psi. (15.8 kg/cm²). The relative flow values were obtained through a weight measurement of the extrudate after the equivalent of 10 minutes.

TABLE 5

EFFECT OF WAX ON THE MELT INDEX OF SULFO EPDM GUM
(10 pts wax per 100 pts Sulfo EPDM)

| Composition | Melt Index at 190°C gms/10 min, 226 psi (15.6 kg/cm²) |
| --- | --- |
| Sulfo EPDM Control | 1.515 |
| 100 pts Sulfo EPDM + 10 pts. Mekon Wax No 10 | 4.805 |
| 100 pts Sulfo EPDM + 10 pts F 3504 Paraffin Wax | 3.927 |

It is evident from the data in Table 5 that the incorporation of moderate wax levels substantially enhances the flow behavior of the Sulfo EPDM gum. This characteristic is very desirable because such sulfonated elastomers can possess undesirably high melt viscosities.

Example 2

One of the undesirable characteristics of ionic elastomers in general, and sulfonated elastomer in particular, is that they can display a significant degree of water sensitivity. The incorportion of the types of waxes described in this application surprisingly reduces the degree of water sensitivity. The amount

9

# 0 002 572

of wax incorporated in these blends will have an effect on the degree of improvement in water sensitivity observed. A series of wax-Sulfo EPDM blends was prepared as described in Example 1, except in these cases significantly higher levels of wax were incorporated in order to assess the effect more rapidly. The resultant blends were then compression molded at 140°C. to form pads about .514 mm thick. These pads were weighed and then immersed in water at 50°C. for a period of 21 days. After that time period the pads were removed, surface moisture blotted off, and then weighed. The increase in weight was determined in terms of weight percent increased over the original pad weight. The values are given in Table 6.

## TABLE 6

### EFFECT OF WAX ON SULFO—EPDM WATER SENSITIVITY

| Composition | Melt Index 190°C 226 psi (15.8 kg/cm$^2$) | % Wt. Increase 21 days in 50°C Water |
|---|---|---|
| Control | | |
| Sulfo-EPDM, No additive | 1.62 | 37.02 |
| 44.5 gms Sulfo-EPDM + 19 gms Mekon No 10 wax | >30 | 12.5 |
| 41.5 gms Sulfo-EPDM + 19 gms F3504 wax | 35.2 | 10.1 |

It is clearly evident that the presence of the various waxes markedly reduces the degree of water sensitivity of the blends as contrasted to Sulfo-EPDM Control.

Example 3

The sulfonated EPDM described in the Preparation was employed to make two compounds A and B having the following formulation:

| | A(Control) | B Wax Blend |
|---|---|---|
| Sulfo EPDM | 100 pts | 100 pts |
| Sunpar 180 oil | 85 pts | 85 pts |
| Calcium carbonate (Purecal U) | 40 pts | 40 pts |
| Zinc oxide (Protox 166) | 25 pts | 25 pts |
| Titanium dioxide | 5 pts | 5 pts |
| Magnesium hydroxide | 0.6 pts | 0.6 pts |
| Ambecol 137—X | 5 pts | 5 pts |
| Ultramarine Blue | .062 pts | .062 pts |
| Paraffin wax F3504 | None | 15 pts |

Formulation B contained 15 pts of paraffin wax or about 5 weight percent. The formulations above were prepared employing conventional rubber compounding equipment and the melt rheology and physical properties compared as shown in Table 7.

10

## 0 002 572

### TABLE 7

#### PHYSICAL PROPERTIES OF COMPOUNDS WITH AND WITHOUT WAX

| Property | Sample A | Sample B |
|---|---|---|
| Tensile strength, 23°C, (psi) kg/cm² | (1065) 151 | (910) 64 |
| Elongation, % | 645 | 720 |
| Set at break, % | 44 | 56 |
| Tensile Strength 60°C, kg/cm² | 37.4 | 32.0 |
| Elongation, 60°C, % | 575 | 680 |
| Hardness, Shore A | 60 | 56 |
| Melt Index, 3 kg/cm² 190°C | 4.90 | 6.35 |

It is evident that the presence of small amounts of wax can improve the flow behavior significantly (over 20%) without a substantial deterioration in physical properties. For many injection molding applications this improvement in flow can be extremely important.

## Claims

1. An elastomeric blend composition, which comprises:
   (a) a sulphonated elastomeric polymer at least partially neutralised and formed from an elastomeric polymer having from 0.1 to 10 wt. percent of olefinic unsaturation; and
   (b) a non-polar and non-polyolefinic wax which is a synthetic, natural or petroleum wax and' containing less than 4.0 wt.% oxygen at a concentration level of from 2 to 20 weight percent of the composition; provided said composition contains no polyolefinic resin.

2. A composition according to claim 1 wherein said elastomeric polymer has an $\bar{M}n$ of less than 60,000 and a Mooney viscosity at 100°C of 5 to 60.

3. A composition according to claim 2, wherein said neutralized sulphonated elastomer is a neutralized sulphonated EPDM terpolymer having 15 to 50 meq. sulfonate groups per 100 grams of said sulphonated EPDM terpolymer, at least 90% of said sulphonate groups being neutralized with a metal cation which is lead, antimony, iron, a metal of Groups IA, IIA, IB or IIB of the Periodic Table of Elements or a mixture thereof.

4. A composition according to any one of the preceding claims, wherein said neutralised sulphonated elastomeric polymer has a preferential plasticizer incorported therein at a concentration level of at least 7 parts by weight per 100 parts by weight of said sulphonated polymer.

5. A composition according to claims 3 and 4, wherein said neutralized and plasticised sulphonated EPDM terpolymer before addition of non-polar wax has a viscosity at 200°C at 0.75 sec$^{-1}$ of $1 \times 10^3$ to $5 \times 10^5$ Pa.s ($1 \times 10^4$ to $5 \times 10^6$ poises).

6. A composition according to claim 5, wherein said preferential plasticizer has a melting point of at least 25°C and is a carboxylic acid having 5 to 30 carbon atoms per molecule, a ketone, a phenol, a trialkyl phosphate, an amide, an amine or a mixture thereof.

7. A composition according to either of claims 4 and 5, wherein said preferential plasticizer is a combination of stearic acid and a metallic salt of said stearic acid, the metal ion of said metallic salt being lead, iron, antimony, a metal of Groups I—A, II—A, I—B or II—B of the Periodic Table of Elements.

8. A composition according to claim 7, wherein said metallic salt is zinc stearate, barium stearate, lead stearate, magnesium stearate or sodium stearate.

9. A composition according to any one of the preceding claims, wherein said non-polar wax is aromatic, paraffinic, naphthenic or microcrystalline.

10. A composition according to any one of the preceding claims, wherein said non-polar wax has an $\bar{M}n$ of 300 to 4000.

11. A composition according to any one of the preceding claims, which further includes a filler at a concentration level of 5 to 300 parts by weight per 100 parts by weight of sulphonated polymer and a rubber process oil at a level of up to 100 parts by weight per 100 parts by weight of sulphonated polymer.

12. A composition according to claim 11, wherein said filler is aluminium silicate, calcium silicate, calcium carbonate, magnesium silicate or a mixture thereof.

## 0 002 572

**Revendications**

1. Composition mixte élastomère, caractérisée en ce qu'elle comprend:

(a) un polymère élastomère sulfoné, au moins partiellement neutralisé et formé à partir d'un polymère élastomère ayant de 0,1 à 10% en poids d'insaturation oléfinique, et (b) une cire non polaire et non polyoléfinique qui est une cire synthétique, naturelle ou de pétrole et qui contient moins de 4,0% en poids d'oxygène à un taux de concentration de 2 à 20% en poids de la composition, à condition que ladite composition ne contienne pas de résine polyoléfinique.

2. Composition selon la revendication 1, caractérisée en ce que ledit polymère élastomère a un $\overline{M}n$ de moins de 60 000 et une viscosité Mooney, à 100°C, de 5 à 60.

3. Composition selon la revendication 2, caractérisée en ce que l'élastomère sulfoné neutralisé est un terpolymère EPDM sulfoné neutralisé contenant 15 à 50 méq. de groupes sulfonate par 100 g du terpolymère EPDM sulfoné, au moins 90% desdits groupes sulfonate étant neutralisés par un cation métallique qui est le plomb, l'antimoine, le fer, un métal des groupes IA, IIA, IB ou IIB de la Classification Périodique des Eléments ou un mélange de ceux-ci.

4. Composition selon l'une quelconque des revendications 1 à 3, caractérisée en ce que le polymère élastomère sulfoné neutralisé contient un plastifiant préférentiel incorporé à un taux de concentration d'au moins 7 parties en poids par 100 parties en poids du polymère sulfoné.

5. Composition selon les revendications 3 et 4, caractérisée en ce que le terpolymère EPDM sulfoné neutralisé et plastifié, avant addition de cire non polaire, a une viscosité, à 200°C à 0,74 s$^{-1}$, de $1 \times 10^3$ à $5 \times 10^5$ Pa.s.

6. Composition selon la revendication 5, caractérisée en ce que le plastifiant préférentiel a un point de fusion d'au moins 25°C et est un acide carboxylique contenant 5 à 30 atomes de carbone par molécule, une cétone, un phénol, un phosphate de trialkyle, un amide, une amine ou un mélange de ceux-ci.

7. Composition selon l'une des revendications 4 et 5, caractérisée en ce que le plastifiant préférentiel est une combinaison d'acide stéarique et d'un sel métallique de l'acide stéarique, l'ion métallique du sel métallique étant le plomb, le fer, l'antimoine ou un métal des groupes I—A, II—A, I—B ou II—B de la Classification Périodique des Eléments.

8. Composition selon la revendication 7, caractérisée en ce que le sel métallique est le stéarate de zinc, le stéarate de baryum, le stéarate de plomb, le stéarate de magnésium ou le stéarate de sodium.

9. Composition selon l'une quelconque des revendications 1 à 8, caractérisée en ce que la cire non polaire est aromatique, paraffinique, naphténique ou microcristalline.

10. Composition selon l'une quelconque des revendications 1 à 9, caractérisée en ce que la cire non polaire a une $\overline{M}n$ de 300 à 4000.

11. Composition selon l'une quelconque des revendications 1 à 10, caractérisée en ce qu'elle comprend en outre une charge à un taux de concentration de 5 à 300 parties en poids par 100 parties en poids de polymère sulfoné et une huile de traitement de caoutchouc à un taux allant jusqu'à 100 parties en poids par 100 parties en poids de polymère sulfoné.

12. Composition selon la revendication 11, caractérisée en ce que la charge est le silicate d'aluminium, le silicate de calcium, le carbonate de calcium, le silicate de magnésium ou un mélange de ceux-ci.


**Patentansprüche**

1. Elastomere Mischung gekennzeichnet durch

(a) ein sulfoniertes elastomeres Polymer, das zumindest teilweise neutralisiert und aus einem elastomerem Polymer mit 0,1 bis 10 Gew.% olefinischer Ungesättigtheit gebildet ist, und

(b) ein nicht polares und nicht polyolefinisches Wachs, das ein synthetisches, natürliches oder ein Ölwachs ist, weniger als 4 Gew.% Sauerstoff enthält und bezogen auf die Mischung in einer Menge von 2 bis 20 Gew.% vorliegt, vorausgesetzt, die Mischung enthält kein Polyolefinharz.

2. Mischung nach Anspruch 1, dadurch gekennzeichnet, daß das elastomere Polymer ein $\overline{M}n$ von weniger als 60.000 und eine Mooney-Viskosität bei 100°C von 5 bis 60 besitzt.

3. Mischung nach Anspruch 2, dadurch gekennzeichnet, daß das neutralisierte, sulfonierte Elastomer ein neutralisiertes sulfoniertes EPDM-Terpolymer mit 15 bis 50 Milliäquivalenten Sulfonatgruppen je 100 g des sulfonierten EPDM-Terpolymers ist, wobei mindestens 90% der Sulfonatgruppen mit einem Metallkation, das Blei, Antimon, Eisen, ein Metall der Gruppen IA, IIA, IB oder IIB des periodischen Systems der Elemente oder eine Mischung derselben ist, neutralisiert sind.

4. Mischung nach jedem der vorangegangenen Ansprüche, dadurch gekennzeichnet, daß das neutralisierte, sulfonierte, elastomere Polymer einen bevorzugten Weichmacher in einer Konzentration von mindestens 7 Gewichtsteilen je 100 Gewichtsteile des sulfonierten Polymers enthält.

5. Mischung nach den Ansprüchen 3 und 4, dadurch gekennzeichnet, daß das neutralisierte und weichgemachte sulfonierte EPDM-Terpolymer vor Zusatz der nicht polaren Wachses eine Viskosität bei 200°C und, 0,74 sec.$^{-1}$ von $1 \times 10^3$ bis $5 \times 10^5$ Pa.s besitzt.

12

**0 002 572**

6. Mischung nach Anspruch 5, dadurch gekennzeichnet, daß der bevorzugte Weichmacher einen Schmelzpunkt von mindestens 25°C besitzt und eine Carbonsäure mit 5 bis 30 Kohlenstoffatomen je Molekül, ein Keton, ein Phenol, ein Trialkylphosphat, ein Amid, ein Amin oder eine Mischung derselben ist.

7. Mischung nach Anspruch 4 oder 5, dadurch gekennzeichnet, daß der bevorzugte Weichmacher eine Kombination von Stearinsäure und einem Metallsalz der Stearinsäure ist, wobei das Metallion des Metallsalzes Blei, Eisen, Antimon, ein Metall der Gruppen I—A, II—A, I—B oder II—B des periodischen Systems der Elemente ist.

8. Mischung nach Anspruch 7, dadurch gekennzeichnet, daß das Metallsalz Zinkstearat, Bariumstearat, Bleistearat, Magnesiumstearat oder Natriumstearat ist.

9. Mischung nach jeden der vorangegangenen Ansprüche, dadurch gekennzeichnet, daß das nicht polare Wachs aromatisch, paraffinisch, naphthenisch oder mikrokristallin ist.

10. Mischung nach jedem der vorangegangenen Ansprüche, dadurch gekennzeichnet, daß das nicht polare Wachs ein $\overline{M}n$ von 300 bis 4000 besitzt.

11. Mischung nach jedem der vorangegangenen Ansprüche, dadurch gekennzeichnet, daß sie außerdem einen Füllstoff in einer Konzentration von 5 bis 300 Gewichtsteilen je 100 Gewichtsteile sulfoniertes Polymer und ein Kautschukprozeßöl in einer Konzentration von bis zu 100 Gewichtsteilen je 100 Gewichtsteile sulfoniertes Polymer enthält.

12. Mischung nach Anspruch 11, dadurch gekennzeichnet, daß der Füllstoff Aluminiumsilikat, Calciumsilikat, Calciumcarbonat, Magnesiumsilikat oder eine Mischung derselben ist.